# EUROPEAN PATENT SPECIFICATION

(11) **EP 2 199 976 B1**
(45) Date of publication and mention of the grant of the patent: **30.04.2014**
(21) Application number: 09014892.5
(22) Date of filing: 01.12.2009
(51) Int. Cl.: G06T 7/00, G06T 15/00

(54) **Image processing method, image processing apparatus and image processing program**
Bildverarbeitungsverfahren, Bildverarbeitungsvorrichtung und Bildverarbeitungsprogramm
Procédé de traitement d'images, appareil de traitement d'images et programme de traitement d'images

(30) Priority: 10.11.2008 JP 2008287525
(43) Date of publication of application: 23.06.2010
(73) Proprietor: FUJIFILM Corporation, Minato-ku Tokyo (JP)
(72) Inventor: Moriya, Yoshiyuki, Tokyo (JP)
(74) Representative: Klunker . Schmitt-Nilson . Hirsch

(56) References cited:
- WO-A1-2006/058343
- Rainer Heintzmann: "Information on View5D", , 8 August 2008 (2008-08-08), XP002672147, Retrieved from the Internet: URL:http://web.archive.org/web/20081007094 836/http://www.nanoimaging.de/View5D/ [retrieved on 2012-03-22]
- HAAS B ET AL: "Automatic segmentation of thoracic and pelvic CT images for radiotherapy planning using implicit anatomic knowledge and organ-specific segmentation strategies", PHYSICS IN MEDICINE AND BIOLOGY, TAYLOR AND FRANCIS LTD. LONDON, GB, vol. 53, no. 6, 21 March 2008 (2008-03-21) , pages 1751-1771, XP002606162, ISSN: 0031-9155, DOI: 10.1088/0021-9155/53/6/017
- DICKEN V ET AL: "Novel projection views for simplified reading of thorax CT scans with multiple pulmonary nodules", INTERNATIONAL CONGRESS SERIES, EXCERPTA MEDICA, AMSTERDAM, NL, vol. 1256, 1 June 2003 (2003-06-01), pages 59-64, XP027453411, ISSN: 0531-5131, DOI: 10.1016/S0531-5131(03)00355-8 [retrieved on 2003-06-01]
- LI QIANG ET AL: "Selective enhancement filters for nodules, vessels, and airway walls in two- and three-dimensional CT scans", MEDICAL PHYSICS, AIP, MELVILLE, NY, US, vol. 30, no. 8, 1 August 2003 (2003-08-01) , pages 2040-2051, XP012012183, ISSN: 0094-2405, DOI: 10.1118/1.1581411

## Description

### BACKGROUND OF THE INVENTION

### Field of the Invention

The present invention is related to an image processing method for generating pseudo three dimensional medical images. Particularly, the present invention is related to an image processing apparatus according to the preamble of claim 1, an image processing method according to the preamble of claim 7 and an image processing program according to the preamble of claim 8 for generating pseudo three dimensional medical images from a plurality of medical images by executing an intensity projection method.

### Description of the Related Art

In the medical field, pseudo three dimensional medical images are generated by executing IP (Intensity Projection) methods that enable three dimensional medical images to be formed with respect to a plurality of medical images.

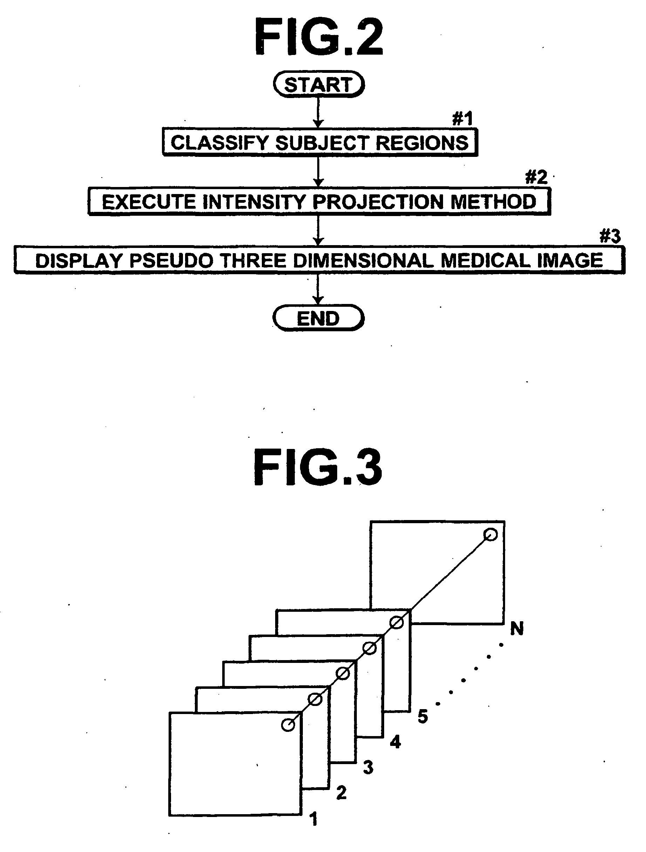

The IP methods are processes by which pixels having the maximum values (alternatively, minimum values or specified values) from among corresponding pixels within all original medical images, which are the targets of processing, are taken out and projected to obtain pseudo three dimensional medical images. That is, in the example illustrated in Figure 3, a pixel having the maximum value (alternatively, the minimum value or a specified value) from among corresponding pixels within the first through Nth original medical images, which have been obtained in the depth direction, is taken out for all pixels, to enable obtainment of a pseudo three dimensional medical image.

An MIP (Maximum Intensity Projection) method that takes out pixels having the maximum values from among corresponding pixels within a plurality of medical images is an example of an IP method. However, there is a tendency for pseudo three dimensional medical images which are generated by the MIP method to be bright as a whole. A minIP (minimum Intensity Projection) that takes out pixels having the minimum values from among corresponding pixels within a plurality of medical images is another example of an IP method. However, there is a tendency for pseudo three dimensional medical images which are generated by the minIP method to be dark as a whole.

A technique for preventing the brightness of projected images from being biased by these IP processes is proposed in Japanese Unexamined Patent Publication No. 7(1995)-303647.

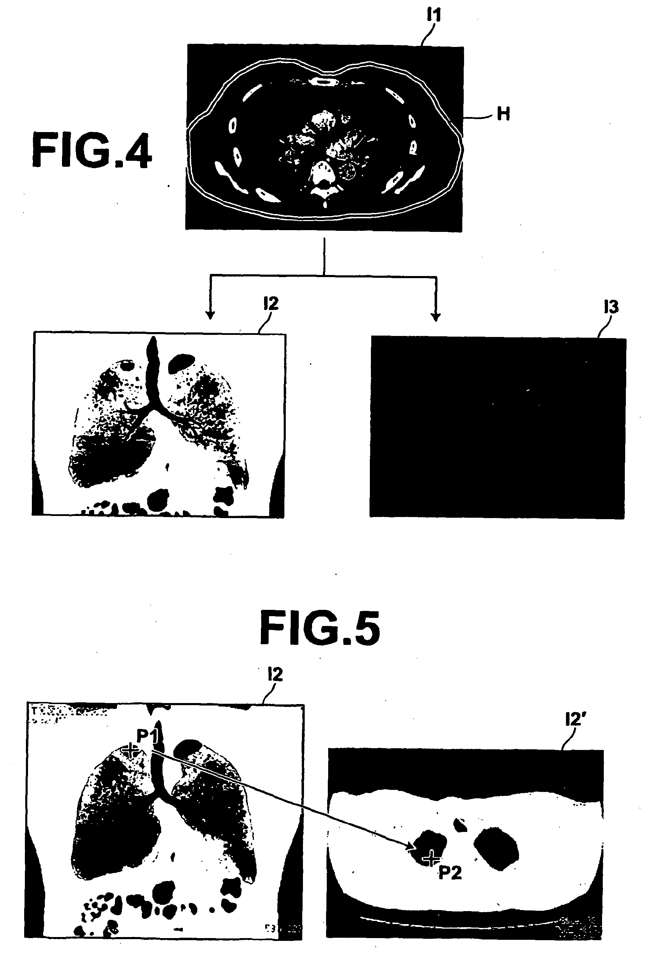

However, in the case that the minIP method is applied to CT images and MRI images, in which regions of subjects that include the surfaces of the subjects' bodies are pictured, and the images are projected, the air regions outside the surfaces of the subjects' bodies have low density values. Therefore, only the air regions outside the surfaces of the subject's bodies become emphasized, and there is a problem that appropriate display cannot be obtained, as in the example of a pseudo three dimensional medical image I3 of Figure 4.

Similarly, in the case that a plurality of medical images are inverted such that the air regions outside the surfaces of subjects' bodies have high density values and the MIP method is employed, only the air regions outside the surfaces of the subject's bodies become emphasized, and a problem may occur that appropriate display cannot be obtained.

WO 2006/058343 A1 discloses an image processing apparatus in accordance with the preamble of claim 1. The apparatus has an image obtaining section (e. g. CT scanning or MR scanning) for obtaining transverse sections of a subject. A segmentation algorithm provides information about a background of the scanned body and the inverse thereof which is termed "the region of interest". This prior art apparatus relies upon volumetric image data using an adaptive segmentation algorithm. Said "region of interest" corresponds to the "subject's" body of the claims.

A similar image processing apparatus is known from Rainer Heintzmann: "Information on View5D", 8 August 2008 (2008-08-08), XP002672147, Retrieved from the Internet:
URL:http://web.archive.org/web/20081007094836/http:// www.nanoimaging.de/View5D/.

### SUMMARY OF THE INVENTION

The present invention has been developed in view of the foregoing circumstances. It is an object of the present invention to provide an image processing apparatus, an image processing method, and an image processing program which are capable of generating pseudo three dimensional medical images, in which viewing of subject regions to be facilitated, from a plurality of medical images.

An image processing apparatus of the present invention comprises the features of claim 1.

The "region classifying section" administers a binarizing process on each of the plurality of medical images, using a predetermined image density value as a reference, and classify one of two types of image regions, which have been divided by the binarizing process, within a medical image as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

Alternatively, the "region classifying section" may administer a binarizing process on each of the plurality of medical images, using a predetermined image density value as a reference, and classify image regions within the medical images, which have been divided by the binarizing process, other than image regions at the edges of a medical image and image regions that connect with the image regions at the edges of the medical image to form a collective region as the subject regions, and classify the collective image region as the non subject region.

The "pseudo three dimensional medical image generating section" may executes the intensity projection method employing either the minIP method or the MIP method.

A configuration may be adopted, wherein the image processing apparatus of the present invention further comprises:
a display section, for displaying the medical images and the pseudo three dimensional medical image;
an input section, for inputting specific points within the displayed medical images; and
a calculating section, for calculating points within the pseudo three dimensional medical image corresponding to the specific points input within the medical images; and wherein:
   the display section displays markers that indicate the corresponding points within the pseudo three dimensional medical image along with the pseudo three dimensional medical image.

A configuration may be adopted, wherein the image processing apparatus of the present invention further comprises:
a display section, for displaying the medical images and the pseudo three dimensional medical image;
an input section, for inputting specific points within the displayed pseudo three dimensional medical images; and
a calculating section, for calculating points within the medical images corresponding to the specific points input within the pseudo three dimensional medical image; and wherein:
   the display section displays markers that indicate the corresponding points within the medical images along with the medical images.

A configuration may be adopted, wherein the image processing apparatus of the present invention further comprises:
a lung region dividing section, for dividing the detected plurality of subject regions into sections that include the left lung region of the subject, and sections that include the right lung region of the subject; and wherein:
   the pseudo three dimensional medical image generating section generates a pseudo three dimensional medical image that represents the right lung and a pseudo three dimensional medical image that represents the left lung, by executing the intensity projection method based on the image information of the sections that include the right lung region and the image information of the sections that include the left lung region.

An image processing method of the present invention is characterized by comprising the steps of claim 7.

An image processing program of the present invention is characterized by causing a computer to realize the functions defined by claim 8.

According to the image processing apparatus, the image processing method, and the image processing program of the present invention, regions within medical images are classified as either subject regions that represent the interiors of the surface of a subject's body and non subject regions that represent the exteriors of the surface of the subject's body, and an IP method is executed based on image information that represents the subject regions. Thereby, pseudo three dimensional medical images, in which viewing of low density regions within the subject's body including the surface of the subject's body is facilitated, can be generated regardless of the density values within the non subject regions.

Note that the program of the present invention may be provided being recorded on a computer readable medium. Those who are skilled in the art would know that computer readable media are not limited to any specific device and include, but are not limited to: floppy disks, CD's, RAM's, ROM's, hard disks, magnetic tapes, and internet downloads, in which computer instructions can be stored and/or transmitted. Transmission of the computer instructions through a network or through wireless transmission means is also within the scope of the present invention. Additionally, computer instructions include, but are not limited to: source, object, and executable code, and can be in any language, including higher level languages, assembly language, and machine language.

### BRIEF DESCRIPTION OF THE DRAWINGS

Figure 1 is a block diagram that illustrates the schematic configuration of an image processing apparatus according to a preferred embodiment of the present invention.
Figure 2 is a flow chart that illustrates the steps of a process for generating pseudo three dimensional medical images executed by the preferred embodiment of the present invention.
Figure 3 is a diagram for explaining the process of intensity projection methods.
Figure 4 is a diagram that illustrates an example of a pseudo three dimensional medical image generated by a method of the present invention and an example of a pseudo three dimensional medical image generated by a different method.
Figure 5 illustrates a specified point within a pseudo three dimensional medical image and a corresponding point within a medical image.
Figure 6 is a flow chart that illustrates the steps of a process for displaying pseudo three dimensional medical images along with medical images executed by the preferred embodiment of the present invention.
Figure 7 illustrates an example of a pseudo three dimensional medical image of a left lung and an example of a pseudo three dimensional medical image of a right lung, generated by the preferred embodiment of the present invention.

### DESCRIPTION OF THE PREFERRED EMBODIMENTS

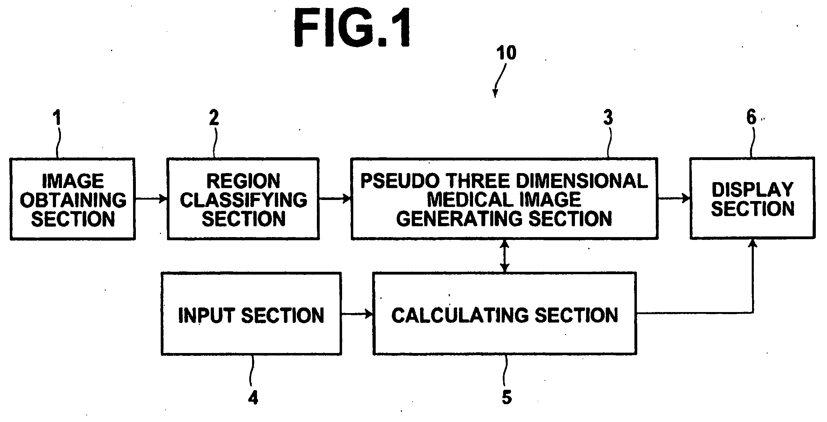

Hereinafter, an embodiment of the present invention will be described with reference to the attached drawings. Figure 1 is a schematic diagram that illustrates the configuration of an image processing apparatus 10 according to a preferred embodiment of the present invention. The image processing apparatus is equipped with: an image obtaining section 1, for obtaining a plurality of medical images that represent transverse sections of a subject, which has been imaged in advance; a region classifying section 2, for classifying regions within each of the plurality of medical images as being one of a subject region that represents the interior of the surface of the subject's body, and a non subject region that represents the exterior of the surface of the subject's body; a pseudo three dimensional medical image generating section 3, for generating a pseudo three dimensional medical image by executing an intensity projection method based on image information that represents the plurality of regions which are classified as being subject regions; a display section 6, for displaying the pseudo three dimensional medical image and/or the medical images; input section 4, for inputting specific points within the displayed medical images or the displayed pseudo three dimensional medical image; and a calculating section 5, to be described later.

The image obtaining section 1 obtains a plurality of medical images by reading out a recording medium in which the plurality of medical images (CT images and MRI images, for example) are recorded. Alternatively, the image obtaining section 1 obtains a plurality of medical images from a CT (Computed Tomography) apparatus or an MRI (Magnetic Resonance Imaging) apparatus via a communication network. As a further alternative, the image obtaining section 1 itself may be a CT apparatus or an MRI apparatus.

The region classifying section 2 classifies regions within each of the plurality of medical images as being one of a subject region that represents the interior of the surface of a subject's body, and a non subject region that represents the exterior of the surface of the subject's body.

The region classifying section 2 is equipped with: a density classifying section (not shown), for classifying pixels within the medical images into high density pixels having image densities greater than or equal to a predetermined reference density value and low density pixels having image densities less than the reference density value; a two dimensional labeling section (not shown) for extracting boundary lines of the high density image regions and labeling the two dimensional high density image regions with numbers to discriminate the high density image regions; a three dimensional labeling section (not shown), for analyzing connections among two dimensional high density images in the direction of the Z axis, and extracting series of high density image groups which are connected in the direction of the Z axis; a volume estimating section (not shown), for tracking a list of line shapes, calculating a sum of the areas and a sum of the peripheral lengths of high density image regions included in pluralities of linked label data, and estimating the volumes of three dimensional medical image regions formed by the outlines of the series of high density image groups; a hole detecting section (not shown) for analyzing the label data of each high density image that constitutes a high density image group which is determined to be a candidate for the surface of the subject's body in order from smaller slice numbers, and searching for a first changing point where the area of the high density image region decreases drastically and the peripheral length of the high density image region increases drastically between pieces of label data having consecutive slice numbers; and a body surface determining section, for ultimately determining the position of the surface of the subject's body.

Specifically, the region classifying means 2 may employ the technique disclosed in Japanese Patent Application No. 2007-256290, for example. In this technique, a binarizing process is administered on each of the plurality of medical images, using a predetermined image density value as a reference. Then, one of two types of image regions, which have been divided by the binarizing process, within a medical image is classified as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

Each of the plurality of tomographic images are binarized with the predetermined image density value as a reference. Each image pictured within the binarized tomographic images is classified as either belonging to a first image group that includes images of the interior of the subject's body and a second image group that includes images of the exterior of the subject's body, based on the positional relationship of the image with other images within the same tomographic image, and based on the positional relationship with other images within other tomographic images. In this manner, each image within the tomographic images is classified taking the three dimensional shape of the image group that it belongs to into consideration, in addition to the two dimensional shape thereof. Therefore, images of lungs, which have low image densities, can be accurately classified as images within the subject's body, based on the positional relationships thereof with other images.

It is preferable for the region classifying section 2 to classify series of images which are connected among a plurality of tomographic images in the same image groups.

The region classifying section 2 classifies image regions which are separated at a given cross section but are connected three dimensionally into the same image group. Therefore, a problem that a portion of the subject which is pictured separately in certain tomographic images become erased can be reduced.

It is preferable for the region classifying section 2 to classify images surrounded by another image in the same image group as the other image.

The region classifying section 2 is capable of accurately classifying image regions which are within the body of the subject and have low image densities, such as lung field regions, as images within the subject's body.

It is preferable for the region classifying section 2 to reclassify image regions from among image regions classified into a second image group, which are present within a tomographic image between image regions classified into a first image group and are sandwiched between image groups classified into the first image group in a predetermined direction, into the first image group.

Alternatively, the region classifying section may administer a binarizing process on each of the plurality of medical images, using a predetermined image density value as a reference, and classify image regions within the medical images, which have been divided by the binarizing process, other than image regions at the edges of a medical image and image regions that connect with the image regions at the edges of the medical image to form a collective region as the subject regions, and classifies the collective image region as the non subject region, by the two dimensional labeling.

The pseudo three dimensional medical image generating section 3 generates a pseudo three dimensional medical image by executing an intensity projection method based on image information that represents the plurality of regions which are classified as being subject regions by the region classifying section 2. Examples of the intensity projection method include the minIP method and the MIP method.

The display section 6 is a monitor, a CRT screen, a liquid crystal display or the like for displaying the medical images or the pseudo three dimensional medical image. It is desirable for an initial screen of the display section 6 to have few overlaps in the direction of projection and to take the facing direction of the subject into consideration. Therefore, a coronal image is displayed such that the subject's left side is displayed toward the right, and the subject's right side is displayed toward the left.

The image processing apparatus 10 is equipped with the input section 4, for inputting specific points within the medical images which are displayed by the display section 6; and a calculating section 5, for calculating points within the pseudo three dimensional medical image corresponding to the specific points input within the medical images. The display section 6 displays markers that indicate the corresponding points within the pseudo three dimensional medical image, along with the pseudo three dimensional medical image.

The image processing apparatus 10 may also be equipped with the input section 4, for inputting specific points within the pseudo three dimensional medical image which is displayed by the display section 6; and a calculating section 5, for calculating points within the medical images corresponding to the specific points input within the pseudo three dimensional medical image. The display section 6 may display markers that indicate the corresponding points within the medical images, along with the medical images.

Note that the image processing apparatus 10 is realized by executing an image processing program, which is recorded in an auxiliary memory device, on a computer (a personal computer, for example).

The image processing program may be recorded on data recording media such as CD-ROM's, or distributed via networks such as the Internet, and then installed in the computer.

Figure 2 is a flow chart that illustrates the steps of a procedure for generating a pseudo three dimensional medical image.

First, the image obtaining section 1 obtains a plurality of typical CT images, which are medical images (axial) that represent slices of a subject from the subject's chest to the subject's legs. The region classifying section 2 classifies the plurality of CT images obtained by the image obtaining section 1 into subject regions that represent the interior of the surface of the subject's body and non subject regions that represent the exterior of the surface of the subject's body, by the aforementioned techniques (step 1). The interior of the line H within a CT image I1 illustrated in Figure 4 represents the subject region, for example. The exterior of the line H within the CT image I1 of Figure 4 represents the non subject region.

Then, the pseudo three dimensional medical image generating section 3 executes the aforementioned minIP method based on the plurality of pieces of image information that represent the subject regions which have been classified by the region classifying section 2 (step 2), to generate a pseudo three dimensional medical image (hereinafter, referred to as a "minIP image")..

The display section 6 displays the minIP image (image I2 of Figure 4) which has been generated by the pseudo three dimensional medical image generating section 3 (step 3).

In this manner, regions within medical images are classified as either subject regions that represent the interiors of the surface of a subject's body and non subject regions that represent the exteriors of the surface of the subject's body. Thereafter, an IP method is executed based on image information that represents the subject regions. Thereby, pseudo three dimensional medical images, in which air regions within the subject's body including the surface of the subject's body are represented appropriately, can be generated regardless of the density values within the non subject regions (without the non subject regions becoming emphasized).

Next, display of pseudo three dimensional medical images along with medical images will be described as an embodiment of operation of the display section 6.

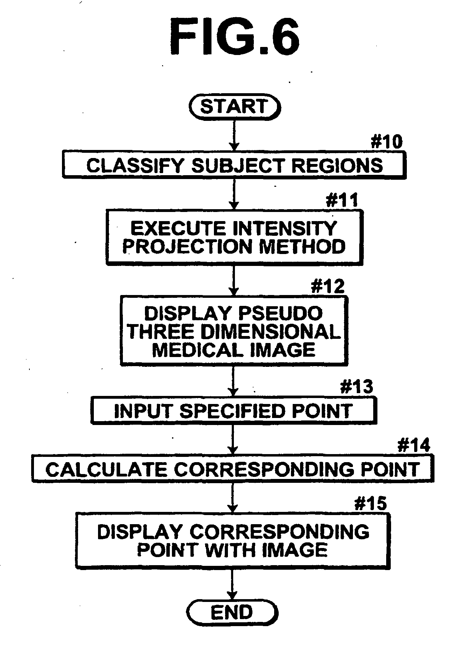

Figure 6 is a flow chart that illustrates the steps of a process for displaying pseudo three dimensional medical images along with medical images.

First, the image obtaining section 1 obtains a plurality of typical CT images, which are medical images (axial) that represent slices of a subject from the subject's chest to the subject's legs. The region classifying section 2 classifies the plurality of CT images obtained by the image obtaining section 1 into subj ect regions that represent the interior of the surface of the subject's body and non subject regions that represent the exterior of the surface of the subject's body, by the aforementioned techniques (step 10) .

Then, the pseudo three dimensional medical image generating section 3 executes the aforementioned minIP method based on the plurality of pieces of image information that represent the subject regions which have been classified by the region classifying section 2 (step 11), to generate a pseudo three dimensional medical image (hereinafter, referred to as a "minIP image").

The display section 6 displays the minIP image which has been generated by the pseudo three dimensional medical image generating section 3 (step 12) . The display section 6 simultaneously displays the minIP image and a CT image together, as illustrated in Figure 5.

The input section 4 receives input of a point P1, which is specified within the minIP image 12 displayed by the display section 6 (step 13).

The calculating section 5 extracts a CT image 12' corresponding to the height position (a Z coordinate that indicates the height position from the subj ect' s legs) of the point P1 specified within the minIP image 12 by the Z buffer method. A CT image having a Z coordinate with the smallest amount of difference when the Z coordinate of the specified point P1 and the Z coordinates of the CT images are compared may be extracted as the CT image 12'.

Thereafter, the calculating section 5 calculates the horizontal position (X coordinate) and the vertical position (Y coordinate) within the CT image 12' of the point P1 specified in the minIP image 12, to obtain a corresponding point P2 which is positioned at the calculated X coordinate and the calculated Y coordinate (step 14).

Next, the display section 6 displays a label (a mark or a point, for example) that indicates the corresponding point P2 on the CT image 12', as illustrated in Figure 5 (step 15).

Alternatively, the image processing apparatus 10 may obtain a point within the pseudo three dimensional medical image that corresponds to a point which is specified within a CT image. Specifically, the minIP image and a CT image 12' are simultaneously displayed together by the display section 6. When a point P2 is specified within the CT image 12', the calculating section 5 calculates the height position (a Z coordinate that indicates the height position from the subject's legs) of the CT image 12' from among the plurality of CT images. Threafter, the calculating section 5 calculates the horizontal position (X coordinate) and the vertical position (Y coordinate) within the minIP image of the point P2 specified in the CT iamge 12', to obtain a corresponding point P1 which is positioned at the calculated X coordinate and the calculated Y coordinate. Next, the display section 6 displays a label (a mark or a point, for example) that indicates the corresponding point P1 on the minIP image 12.

Note that the method disclosed in Japanese Unexamined Patent Publication No. 2002-006044 with regard to PET images may be applied to display the minIP image with the CT images.

When a user specifies a point within a minIP image displayed by the display section 6, a label that indicates the specified point is displayed. In addition, a label that indicates a point that corresponds to the specified point is also displayed within a CT image by the display section 6.

Alternatively, when a user specifies a point within a CT image displayed by the display section 6, a label that indicates the specified point may be displayed. In addition, a label that indicates a point that corresponds to the specified point may also be displayed within a minIP image by the display section 6.

There is a possibility that the displayed labels may hinder image diagnosis by users. Therefore, the display of the labels may be switched ON and OFF in response to user input via the input section 4 (operation of a mouse button, keys of a keyboard, or the like) .

In addition, when a point is specified within the minIP image displayed by the display section 6, the label that indicates the corresponding point may be automatically displayed in the CT image if the input section 4 (a mouse button or the like) is continuously operated for a predetermined amount of time.

Similarly, when a point is specified within a CT image displayed by the display section 6, the label that indicates the corresponding point may be automatically displayed in the minIP image if the input section 4 (a mouse button or the like) is continuously operated for a predetermined amount of time.

The configuration described above enables confirmation of where an air region or the like, which is observed within the CT images, is positioned within the minIP image as a whole. In this case, a warning such as an error message may be displayed when a point outside the body of the subject is specified within a CT image. However, in cases that display of the warning would render the display screen to become cluttered or the like, the warning may be switched to a configuration in which a label corresponding to the point outside the subject's body which is specified via the input section 4 is not displayed.

A configuration may be adopted, wherein the labels are not displayed when operation of the input section 4 (a mouse button or the like) is ceased, while the CT image is continued to be displayed.

In addition, a configuration may be adopted wherein display of the labels can be selectively set ON or OFF by operating the input section 4.

In addition, a configuration may be adopted wherein a rotating command is received via the input section 4, and the pseudo three dimensional medical image generating section 3 generates image data that represents a rotated minIP image, and the rotated minIP image is displayed by the display section 6. Note that in the case that the specified point or the corresponding point are input, the labels are displayed by tracking the rotation. The method for tracking rotation disclosed in Japanese Patent Application No. 2008-145402 may be applied.

Next, sectioned display of pseudo three dimensional medical images of a right lung and a left lung will be described as an embodiment of operation of the display section 6.

The image processing apparatus 10 is further equipped with a lung region dividing section (not shown), for dividing the detected plurality of subject regions into sections that include the left lung region of the subject, and sections that include the right lung region of the subject. The pseudo three dimensional medical image generating section 3 generates a pseudo three dimensional medical image that represents the right lung and a pseudo three dimensional medical image that represents the left lung, by executing an intensity projection method based on the image information of the sections that include the right lung region and the image information of the sections that include the left lung region.

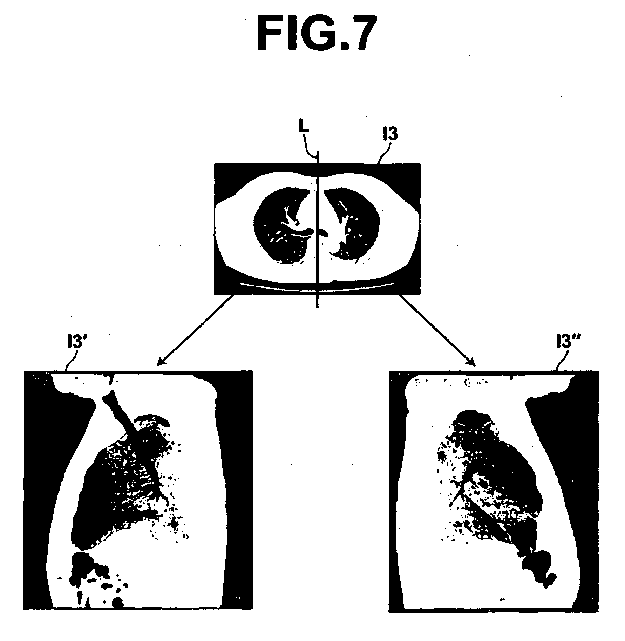

The lung region dividing section divides the plurality of classified subject regions into sections that includes the left lung region of a subject and sections that include the right lung region of the subject. For example, the horizontal width of the detected subject regions is calculated, and a center line L is set as illustrated in Figure 7, in order to divide the subject regions into sections that includes the left lung region of the subject and sections that include the right lung region of the subject.

It is desirable for the display section 6 to divide the left and right lung fields and to display a minIP image 13' and a minIP image 13" from the sagittal direction, as illustrated in Figure 7. Only the right side from the central axis of the surface of the body and the left side from the central axis of the surface of the body of the lungs are displayed. The display section 6 displays a label that indicates which of the left and right lung fields is being displayed within the displayed image.

The display section 6 is capable of simultaneously displaying the minIP image 13' and the minIP image 13" together as illustrated in Figure 7, and also switching display between the minIP image 13' and the minIP image 13" according to display settings which are input via the input section 4.

In addition, a configuration may be adopted wherein a rotating command is received via the input section 4, and the pseudo three dimensional medical image generating section 3 generates image data that represents a rotated minIP image 13' and a rotated minIP image 13". Thereafter, the rotated minIP image 13' and the rotated minIP image 13" are displayed by the display section 6. For example, in the case that a command to rotate one of the minIP image 13' and the minIP image 13" is input via the input section 4, the other image may be rotated in the same direction or the opposite direction.

Further, in the case that a command to rotate one of the minIP image 13' and the minIP image 13" is input via the input section 4, the other image may be rotated in the same direction vertically, and rotated in the opposite direction horizontally.

In the case that a point is specified within the medical image 13 of Figure 7 via the input section 4, and the minIP image 13' and the minIP image 13" are being displayed simultaneously, if a point within the left lung is specified within the medical image 13, a cursor is displayed within the minIP image 13" of the left lung, while no label indicating a corresponding point is displayed within the minIP image 13' of the right lung. Conversely, if a point within the right lung is specified within the medical image 13, a cursor is displayed within the minIP image 13' of the right lung, while no label indicating a corresponding point is displayed within the minIP image 13" of the left lung.

In the case that a point is specified within the medical image 13 of Figure 7 via the input section 4, and only one of the minIP image 13' and the minIP image 13" is being displayed, if a point within the left lung is specified within the medical image 13, a label that indicates a corresponding point is displayed within the minIP image 13" of the left lung. Conversely, if a point within the right lung is specified within the medical image 13, a label that indicates a corresponding point is displayed within the minIP image 13' of the right lung.

Note that the above embodiment was described with CT images as the medical images. Alternatively, it is possible to employ MRI images as the medical images.

In the embodiment described above, regions within medical images are classified as either subject regions that represent the interiors of the surface of a subject's body and non subject regions that represent the exteriors of the surface of the subject's body. Thereafter, an IP method is executed based on image information that represents the subject regions. Thereby, pseudo three dimensional medical images, in which viewing of low density regions within the subject's body including the surface of the subject's body is facilitated, can be generated regardless of the density values within the non subject regions.

Thereby, the display section 6 can display the subject regions within the pseudo three dimensional medical image in an easily viewable state.

## Claims

1. An image processing apparatus, comprising:
an image obtaining section (1), for obtaining a plurality of medical images that represent transverse sections of a subject, which has been imaged in advance;
a region classifying section (2), for classifying regions within each of the plurality of medical images as being one of a subject region that represents the interior of the surface of the subject' s body, and a non subject region that represents the exterior of the surface of the subject's body; and
a pseudo three dimensional medical image generating section (3), for generating a pseudo three dimensional medical image by executing an intensity projection method based one image information that represents the plurality of regions which are classified as being subject regions,
**characterized in that**
the region classifying section (2) is adapted to administer a binarizing process on each of the plurality of medical images, using a predetermined image density value as a reference; and
to classify one of two types of image regions, which have been divided by the binarizing process, within a medical image as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

2. An image processing apparatus as defined in claim 1, wherein:
the pseudo three dimensional medical image generating section (3) is adapted to execute the intensity projection method employing the minIP method.

3. An image processing apparatus as defined in claim 1, wherein:
the pseudo three dimensional medical image generating section (3) is adapted to execute the intensity projection method employing the MIP method.

4. An image processing apparatus as defined in any one of claims 1 to 3, further comprising:
a display section (6), for displaying the medical images and the pseudo three dimensional medical image;
an input section (4), for inputting specific points within the displayed medical images; and
a calculating section (5), for calculating points within the pseudo three dimensional medical image corresponding to the specific points input within the medical images; and wherein:
the display section (6) is adapted to display markers that indicate the corresponding points within the pseudo three dimensional medical image along with the pseudo three dimensional medical image.

5. An image processing apparatus as defined in any one of claims 2 and 3, further comprising:
a display section (6), for displaying the medical images and the pseudo three dimensional medical image;
an input section (4), for inputting specific points within the displayed pseudo three dimensional medical images; and
a calculating section (5), for calculating points within the medical images corresponding to the specific points input within the pseudo three dimensional medical image; and wherein:
the display section (6) displays markers that indicate the corresponding points within the medical images along with the medical images,

6. An image processing apparatus as defined in any one of claims 1 to 3, further comprising:
a lung region dividing section, for dividing the detected plurality of subject regions into sections that include the left lung region of the subject, and sections that include the right lung region of the subject; and wherein:
the pseudo three dimensional medical image generating section (3) generates a pseudo three dimensional image that represents the right lung and a pseudo three dimensional image that represents the left lung, by executing the intensity projection method based on the image information of the sections that include the right lung region and the image information of the sections that include the left lung region.

7. An image processing method, comprising the steps of:
obtaining a plurality of medical images that represent transverse sections of a subject, which has been imaged in advance;
classifying regions within each of the plurality of medical images as being one of a subject region that represents the interior of the surface of the subject's body, and a non subject region that represents the exterior of the surface of the subject's body; and
generating a pseudo three dimensional medical image by executing an intensity projection method based on image information that represents the plurality of regions which are classified as being subject regions, **characterized by** the steps of
administering a binarizing process on each of the plurality of medical images, using a predetermined image density value as a reference; and
classifying one of two types of image regions, which have been divided by the binarizing process, within a medical image as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

8. A computer readable medium having a program recorded therein that causes a computer to realize the functions of:
obtaining a plurality of medical images that represent transverse sections of a subject, which has been imaged in advance;
classifying regions within each of the plurality of medical images as being one of a subject region that represents the interior of the surface of the subject's body, and a non subject region that represents the exterior of the surface of the subject's body; and
generating a pseudo three dimensional medical image by executing an intensity projection method based on image information that represents the plurality of regions which are classified as being subject regions,
administering a binarizing process on each of the plurality of medical images, using a predetermined image density value as a reference; and
classifying one of two types of image regions, which have been divided by the binarizing process, within a medical image as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

## Patentansprüche

1. Bildverarbeitungsvorrichtung, umfassend:
einen Bildgewinnungsabschnitt (1) zum Gewinnen einer Mehrzahl medizinischer Bilder, die Querschnitte eines Subjekts darstellen, welches zuvor abgebildet wurde;
einen Zonenklassifizierabschnitt (2) zum Klassifizieren von Zonen innerhalb jedes der mehreren medizinischen Bilder als eine von einer Subjektzone, die das Innere der Oberfläche des Körpers des Subjekts repräsentiert, und einer Nicht-Subjektzone, die das Äußere der Oberfläche des Körpers des Subjekts repräsentiert; und
einen pseudo-dreidimensionalen medizinischen Bilderzeugungsabschnitt (3) zum Erzeugen eines pseudo-dreidimensionalen medizinischen Bilds durch Ausführen eines Intensitäts-Projektionsverfahrens basierend auf Bildinformation, die die mehreren Zonen repräsentiert, die als Subjektzonen klassifiziert sind,
**dadurch gekennzeichnet, dass**
der Zonenklassifizierabschnitt (2) dazu ausgebildet ist, auf jedes der mehreren medizinischen Bilder unter Verwendung eines vorbestimmten Bilddichtewerts als Referenzwert einen Binärumsetzprozess anzuwenden; und
einen der beiden Typen von Bildzonen, die durch den Binärumsetzprozess aufgeteilt wurden, innerhalb eines medizinischen Bilds als eine der Subjektzone, die das Innere der Oberfläche des Körpers des Subjekts repräsentiert, und der Nicht-Subjektzone, die das Äußere der Oberfläche des Körpers des Subjekts repräsentiert, zu klassifizieren auf der Grundlage der Lagebeziehung bezüglich einer Bildzone des anderen Typs innerhalb des medizinischen Bilds, und auf der Grundlage der Lagebeziehung bezüglich Bildzonen des anderen Typs, die aus anderen medizinischen Bildern extrahiert wurden.

2. Bildverarbeitungsvorrichtung nach Anspruch 1, bei der:
der pseudo-dreidimensionale medizinische Bilderzeugungsabschnitt (3) dazu ausgebildet ist, das Intensitäts-Projektionsverfahren unter Verwendung des minIP-Verfahrens auszuführen.

3. Bildverarbeitungsvorrichtung nach Anspruch 1, bei der:
der pseudo-dreidimensionale medizinische Bilderzeugungsabschnitt (3) dazu ausgebildet ist, das Intensitäts-Projektionsverfahren unter Verwendung des MIP-Verfahrens auszuführen.

4. Bildverarbeitungsvorrichtung nach einem der Ansprüche 1 bis 3, weiterhin umfassend:
einen Anzeigeabschnitt (6) zum Anzeigen der medizinischen Bilder und des pseudo-dreidimensionalen medizinischen Bilds;
einen Eingabeabschnitt (4) zum Eingeben spezifischer Punkte innerhalb der angezeigten medizinischen Bilder; und
einen Berechnungsabschnitt (5) zum Berechnen von Punkten innerhalb des pseudo-dreidimensionalen medizinischen Bilds entsprechend den eingegebenen spezifischen Punkten innerhalb der medizinischen Bilder; wobei
der Anzeigeabschnitt (6) dazu ausgebildet ist, Markierungen anzuzeigen, die die entsprechenden Punkte innerhalb des pseudo-dreidimensionalen medizinischen Bilds zusammen mit dem pseudo-dreidimensionalen medizinischen Bild anzuzeigen.

5. Bildverarbeitungsvorrichtung nach einem der Ansprüche 2 und 3, weiterhin umfassend:
einen Anzeigeabschnitt (6) zum Anzeigen der medizinischen Bilder und des pseudo-dreidimensionalen medizinischen Bilds;
einen Eingabeabschnitt (4) zum Eingeben spezifischer Punkte innerhalb der angezeigten pseudo-dreidimensionalen medizinischen Bilder; und
einen Berechnungsabschnitt (5) zum Berechnen von Punkten innerhalb der medizinischen Bilder, die den spezifischen Punkten entsprechen, die innerhalb des pseudo-dreidimensionalen medizinischen Bilds eingegeben sind, wobei
der Anzeigeabschnitt (6) Markierungen anzeigt, welche die entsprechenden Punkte innerhalb der medizinischen Bilder zusammen mit den medizinischen Bildern anzeigt.

6. Bildverarbeitungsvorrichtung nach einem der Ansprüche 1 bis 3, weiterhin umfassend:
einen Lungenzonen-Aufteilungsabschnitt zum Aufteilen der nachgewiesenen mehreren Subjektzonen in Abschnitte, die die linke Lungenzone des Subjekts enthalten, und Abschnitte, die die rechte Lungenzone des Subjekts enthalten, wobei:
der pseudo-dreidimensionale medizinische Bilderzeugungsabschnitt (3) ein pseudo-dreidimensionales Bild erzeugt, welches die rechte Lunge repräsentiert, und ein pseudo-dreidimensionales Bild erzeugt, welches die linke Lunge darstellt, indem das Intensitäts-Projektionsverfahren basierend auf der Bildinformation der Abschnitte, die die rechte Lungenzone enthalten, und der Bildinformation der Abschnitte, die die linke Lungenzone enthalten, ausgeführt wird.

7. Bildverarbeitungsverfahren, umfassend folgende Schritte:
Gewinnen einer Mehrzahl medizinischer Bilder, die Querschnitte eines Subjekts repräsentieren, welches zuvor abgebildet wurde;
Klassifizieren von Zonen innerhalb jedes der mehreren medizinischen Bilder als eine von einer Subjektzone, die das Innere der Oberfläche des Körpers des Subjekts repräsentiert, und einer Nicht-Subjektzone, die das Äußere der Oberfläche des Körpers des Subjekts repräsentiert; und
Erzeugen eines pseudo-dreidimensionalen medizinischen Bilds durch Ausführen eines Intensitäts-Projektionsverfahrens basierend auf Bildinformation, die die mehreren Zonen repräsentiert, die als Subjektzonen klassifiziert sind, **gekennzeichnet durch** folgende Schritte:
Anwenden eines Binärumsetzprozesses auf jedes der mehreren medizinischen Bilder unter Verwendung eines vorbestimmten Bilddichtewerts als Referenzwert; und
Klassifizieren eines der zwei Typen von Bildzonen, die **durch** den Binärumsetzprozess aufgeteilt sind, innerhalb eines medizinischen Bilds als eine der Subjektzone, die das Innere der Oberfläche des Körpers des Subjekts repräsentiert, und der Nicht-Subjektzone, welche das Äußere der Oberfläche des Körpers repräsentiert, basierend auf der Lagebeziehung bezüglich einer Bildzone des anderen Typs innerhalb des medizinischen Bilds, und basierend auf der Lagebeziehung bezüglich Bildzonen des anderen Typs, welche aus anderen medizinischen Bildern extrahiert wurden.

8. Computerlesbares Medium mit einem darin aufgezeichneten Programm, das einen Computer veranlasst, folgende Funktionen umzusetzen:
Gewinnen einer Mehrzahl medizinischer Bilder, die Querschnitte eines Subjekts repräsentieren, welches zuvor abgebildet wurde;
Klassifizieren von Zonen innerhalb jedes der mehreren medizinischen Bilder als eine von einer Subjektzone, die das Innere der Oberfläche des Körpers des Subjekts repräsentiert, und einer Nicht-Subjektzone, die das Äußere der Oberfläche des Körpers des Subjekts repräsentiert; und
Erzeugen eines pseudo-dreidimensionalen medizinischen Bilds durch Ausführen eines Intensitäts-Projektionsverfahrens basierend auf Bildinformation, die die mehreren Zonen repräsentiert, die als Subjektzonen klassifiziert sind, **gekennzeichnet durch** folgende Schritte:
Anwenden eines Binärumsetzprozesses auf jedes der mehreren medizinischen Bilder unter Verwendung eines vorbestimmten Bilddichtewerts als Referenzwert; und
Klassifizieren eines der zwei Typen von Bildzonen, die **durch** den Binärumsetzprozess aufgeteilt sind, innerhalb eines medizinischen Bilds als eine der Subjektzone, die das Innere der Oberfläche des Körpers des Subjekts repräsentiert, und der Nicht-Subjektzone, welche das Äußere der Oberfläche des Körpers repräsentiert, basierend auf der Lagebeziehung bezüglich einer Bildzone des anderen Typs innerhalb des medizinischen Bilds, und basierend auf der Lagebeziehung bezüglich Bildzonen des anderen Typs, welche aus anderen medizinischen Bildern extrahiert wurden.

## Revendications

1. Appareil de traitement d'images, comprenant :
une section d'obtention d'images (1), pour obtenir une pluralité d'images médicales qui représentent des sections transversales d'un sujet, qui a été observé au préalable ;
une section de classification de régions (2) pour classifier des régions à l'intérieur de chacune de la pluralité d'images médicales comme étant l'une d'une région de sujet qui représente l'intérieur de la surface du corps du sujet, et d'une région non sujet qui représente l'extérieur de la surface du corps du sujet ; et
une section génératrice d'image médicale pseudo-tridimensionnelle (3), pour générer une image médicale pseudo-tridimensionnelle en exécutant un procédé de projection d'intensité sur la base d'informations d'image qui représentent la pluralité de régions qui sont classifiées comme étant des régions de sujet,
**caractérisé en ce que**
la section de classification de région (2) est conçue pour administrer un processus de binarisation sur chacune de la pluralité d'images médicales, en utilisant une valeur de densité d'image prédéterminée comme référence ; et
pour classifier l'une des deux types de régions d'image, qui ont été divisées par le processus de binarisation, à l'intérieur d'une image médicale comme l'une de la région de sujet qui représente l'intérieur de la surface du corps du sujet et de la région non sujet qui représente l'extérieur de la surface du corps du sujet, sur la base de la relation positionnelle avec une région d'image de l'autre type à l'intérieur de l'image médicale, et sur la base de la relation positionnelle avec des régions d'image de l'autre type qui ont été extraites d'autres images médicales.

2. Appareil de traitement d'images selon la revendication 1, dans lequel
la section de génération d'image médicale pseudo-tridimensionnelle (3) est conçue pour exécuter le procédé de projection d'intensité au moyen du procédé minIP.

3. Appareil de traitement d'images selon la revendication 1, dans lequel
la section de génération d'image médicale pseudo-tridimensionnelle (3) est conçue pour exécuter le procédé de projection d'intensité au moyen du procédé MIP.

4. Appareil de traitement d'images selon l'une quelconque des revendications 1 à 3, comprenant en outre :
une section d'affichage (6), pour afficher les images médicales et l'image médicale pseudo-tridimensionnelle ;
une section d'entrée (4), pour entrer des points spécifiques à l'intérieur des images médicales affichées ; et
une section de calcul (5), pour calculer des points à l'intérieur de l'image médicale pseudo-tridimensionnelle correspondant aux points spécifiques entrés à l'intérieur des images médicales ; et dans lequel :
la section d'affichage (6) est conçue pour afficher des marqueurs qui indiquent les points correspondants à l'intérieur de l'image médicale pseudo-tridimensionnelle ainsi que l'image médicale pseudo-tridimensionnelle.

5. Appareil de traitement d'images selon l'une quelconque des revendications 2 et 3, comprenant en outre :
une section d'affichage (6), pour afficher les images médicales et l'image médicale pseudo-tridimensionnelle ;
une section d'entrée (4), pour entrer des points spécifiques à l'intérieur des images médicales affichées ; et
une section de calcul (5), pour calculer des points à l'intérieur des images médicales correspondant aux points spécifiques entrés à l'intérieur de l'image médicale pseudo-tridimensionnelle ; et dans lequel :
la section d'affichage (6) affiche les marqueurs indiquant les points correspondants à l'intérieur des images médicales ainsi que les images médicales.

6. Appareil de traitement d'images selon l'une quelconque des revendications 1 à 3, comprenant en outre :
une section de division de région pulmonaire, pour diviser la pluralité détectée de régions de sujet en sections qui comportent la région pulmonaire gauche du sujet, et sections qui comportent la région pulmonaire droite du sujet ; et dans lequel
la section génératrice d'image médicale pseudo-tridimensionnelle (3) génère une image pseudo-tridimensionnelle représentant le poumon droit et une image pseudo-tridimensionnelle représentant le poumon gauche, en exécutant le procédé de projection d'intensité sur la base des informations d'image des sections qui comportent la région pulmonaire droite et des informations d'image des sections qui comportent la région pulmonaire gauche.

7. Procédé de traitement d'image, comprenant les étapes suivantes :
l'obtention d'une pluralité d'images médicales qui représentent des sections transversales d'un sujet, qui a été observé au préalable ;
la classification de régions à l'intérieur de chacune de la pluralité d'images médicales comme étant l'une d'une région de sujet qui représente l'intérieur de la surface du corps du sujet, et d'une région non sujet qui représente l'extérieur de la surface du corps du sujet ; et
la génération d'une image médicale pseudo-tridimensionnelle en exécutant un procédé de projection d'intensité sur la base d'informations d'image qui représentent la pluralité de régions qui sont classifiées comme étant des régions de sujet, **caractérisé par** les étapes suivantes :
l'administration d'un processus de binarisation sur chacune de la pluralité d'images médicales, en utilisant une valeur de densité d'image prédéterminée comme référence ; et
la classification de l'un des deux types de régions d'image, qui ont été divisées à l'aide du processus de binarisation, à l'intérieur d'une image médicale comme une de la région de sujet qui représente l'intérieur de la surface du corps du sujet et de la région non sujet qui représente l'extérieur de la surface du corps du sujet, sur la base de la relation positionnelle avec une région d'image de l'autre type à l'intérieur de l'image médicale, et sur la base de la relation positionnelle avec des régions d'image de l'autre type qui ont été extraites d'autres images médicales.

8. Support lisible par ordinateur incorporant un programme enregistré, qui permet à un ordinateur d'exécuter les fonctions suivantes :
l'obtention d'une pluralité d'images médicales qui représentent les sections transversales d'un sujet, qui a été observé au préalable ;
la classification de régions à l'intérieur de chacune de la pluralité d'images médicales comme étant l'une d'une région de sujet qui représente l'intérieur de la surface du corps du sujet, et d'une région non sujet qui représente l'extérieur de la surface du corps du sujet ; et
la génération d'une image médicale pseudo-tridimensionnelle en exécutant un procédé de projection d'intensité sur la base d'informations d'image qui représentent la pluralité de régions qui sont classifiées comme étant des régions de sujet,
l'administration d'un processus de binarisation sur chacune de la pluralité d'images médicales, en utilisant une valeur de densité d'image prédéterminée comme référence ; et
la classification de l'une des deux types de régions d'image, qui ont été divisées au moyen du processus de binarisation, à l'intérieur d'une image médicale comme la région de sujet qui représente l'intérieur de la surface du corps du sujet et la région non sujet qui représente l'extérieur de la surface du corps du sujet, sur la base de la relation positionnelle avec une région d'image de l'autre type à l'intérieur de l'image médicale, et sur la base de la relation positionnelle avec des régions d'image de l'autre type qui ont été extraites d'autres images médicales.
